# EUROPEAN PATENT SPECIFICATION

(11) **EP 3 030 412 B1**
(45) Date of publication and mention of the grant of the patent: **28.11.2018**
(21) Application number: 14758661.4
(22) Date of filing: 22.07.2014
(51) Int. Cl.: B29D 30/30, B65H 20/34

(54) **METHOD AND APPARATUS FOR CONTROLLING THE DELIVERY OF A CONTINUOUS ELONGATED ELEMENT IN A PROCESS FOR BUILDING TYRES FOR VEHICLE WHEELS**
VERFAHREN UND VORRICHTUNG ZUR STEUERUNG DER ABGABE EINES KONTINUIERLICHEN LÄNGLICHEN ELEMENTS IN EINEM VERFAHREN ZUR HERSTELLUNG VON REIFEN FÜR FAHRZEUGRÄDER
PROCÉDÉ ET APPAREIL DE COMMANDE DE LA DISTRIBUTION D'UN ÉLÉMENT ALLONGÉ ET CONTINU DANS UN PROCÉDÉ DE FABRICATION DE PNEUS POUR ROUES DE VÉHICULE

(30) Priority: 05.08.2013 IT MI20131332
(43) Date of publication of application: 15.06.2016
(73) Proprietor: Pirelli Tyre S.p.A., 20126 Milano (IT)
(72) Inventor: BOSIO, Gian Luigi, I-20126 Milano (IT); BIGOGNO, Mauro, I-20126 Milano (IT)
(74) Representative: Brasca, Marco
(86) International application number: PCT/IB2014/063310
(87) International publication number: WO 2015/019222

(56) References cited:
- EP-A1- 1 647 394
- EP-A2- 0 344 928
- EP-A2- 1 318 006
- DE-A1- 10 202 599
- JP-A- 2002 205 857
- JP-A- 2009 184 760
- JP-A- 2011 042 426
- NL-C2- 2 001 509
- US-A- 3 989 565
- US-A1- 2009 152 388

## Description

The present invention has as object a method for controlling the delivery of an elongated element. In particular, the present invention also refers to a process and an apparatus implementing such method.

A tyre for vehicle wheels generally comprises a carcass structure comprising at least one carcass ply having axially opposite end edges engaged with respective annular anchoring structures integrated in the zones normally identified with the name "beads". The carcass structure is associated with a belt structure comprising one or more belt layers, situated in radial superimposition with respect to each other and with respect to the carcass ply. In radially outer position with respect to the belt structure, a tread band made of elastomeric material is applied, like other semifinished products constituting the tyre. Respective sidewalls made of elastomeric material are also applied in axially outer position on the lateral surfaces of the carcass structure, each being extended from one of the lateral edges of the tread band up to the respective annular structure for anchoring to the beads. After the building of the green tyre, actuated by means of assembly of respective semifinished products, a moulding and vulcanising treatment is generally executed, aimed to determine the structural stabilisation of the tyre by means of cross-linking of the elastomeric material as well as to impart a desired band design on the tread band and possible indicia at the sidewalls.

With the term "elastomeric material", it is intended a composition comprising at least one elastomeric polymer and at least one reinforcement filler. Preferably, such composition also comprises additives such as cross-linking agents and/or plasticisers. Due to the presence of the cross-linking agents, such material can be cross-linked by means of heating, so as to form the final manufactured product. By "semifinished product", it is intended an elongated element, i.e. an element in which one dimension is predominant with respect to the remaining ones. Preferably said elongated element is only made of elastomeric material or comprising further structural elements. Preferably said elongated element is delivered on a forming drum in order to form at least one tyre component.

The semifinished product is preferably defined by a "continuous elongated element" shaped as a strip with a flattened section. Preferably, the further structural elements comprise one or more textile or metallic reinforcement cords. Such reinforcement cords are preferably arranged parallel to each other and preferably they are extended along the longitudinal direction of the elongated element itself. Said continuous elongated element is preferably delivered in a circumferential sense on a forming drum, for example from a reel or from an extruder, to form multiple mutually adjacent and/or partially superimposed coils. Preferably, the continuous elongated element wound in coils forms a part of the tyre belt structure.

The document EP 1 595 838 shows a temporary storage device for a linear body comprising a plurality of temporary storage means provided with a plurality of upper rollers arranged parallel to each other along a lateral direction and free to rotate; a plurality of lower rollers are also provided, arranged below the spaces delimited between adjacent upper rollers, free to rotate and capable of being moved closer to and away from the upper rollers. The temporary storage means enclose a linear body that advances along a longitudinal direction around the upper rollers and the lower rollers to form a festoon. Guide means guide the linear body supplied from the outlet of one of the temporary storage means to an inlet of another of the temporary storage means.

The document NL 2001 509 illustrates an apparatus for applying a strip-like element on a drum for building tyres. The apparatus comprises a roller which supports the strip-like element wound in a coil and a storage (buffer) device. A control device controls the tension of the strip-like element and a delivery device serves to apply the strip-like element on the building drum. The storage device comprises an upper support provided with a plurality of idle rollers and a lower support provided with a plurality of idle rollers.

The document JP2009184760 discloses accumulator means for a rubber strip comprising multiple accumulator parts, with each accumulator part comprising fixed roller group along with elevating roller group including multiple lower guiding rollers installed on lateral elevating frame, wherein a endless carrying tape is alternately folded back and wound so as to zig-zag between upper guiding rollers and lower guiding rollers. Accumulator means has driving roller for rolling the endless carrying tape, detection tool, for detecting the height difference between lateral elevating frame in one accumulator part and lateral elevating frame in another adjacent accumulator part, and elevating frame height adjustment means for adjusting the height difference by controlling driving roller via a signal from detection tool .

The Applicant has observed that, in the devices of the type illustrated in EP 1 595 838, JP2009184760 and NL 2001 509, the continuous elongated element is made to move along a zigzag path (festoon), defined by a plurality of idle rollers, before reaching the device for applying the same on a forming drum. These dynamic storage devices have the function of absorbing possible fluctuations and/or interruptions in the delivery of the elongated element by the reel on which it is wound, in a manner such that these do not affect the deposition that occurs more downstream on the forming drum and/or compensate for differences between the speed of extraction of the continuous elongated element from the reel and the speed of deposition thereof on the forming drum. Said dynamic storage devices, as stated, usually comprise a plurality of idle rollers, around each of which the continuous elongated element is partially wound, and which are arranged in a manner such to delimit the abovementioned zigzag path.

The document US2009152388 discloses a device for adjusting the delivery rate of a linear element. The device forms a delivery path for the linear element between an inlet to the device at a delivery rate that is substantially constant and an outlet from the device at a delivery rate that is variable and substantially periodic and varies the length of the path of the linear element in application of a predetermined periodic relationship. The device includes a plurality of pulleys movable in rectilinear translation periodically in sinusoidal manner.

The Applicant has observed that the tyres produced by means of the apparatuses illustrated above can have structural characteristics that do not reflect the design characteristics.

In particular, the Applicant has observed that the semifinished products produced starting from continuous elongated elements made of elastomeric material reinforced with textile or metallic cords, and managed by means of the use of the abovementioned storage (buffer) devices, are affected by the tensions/deformations sustained by said continuous elongated elements while they move through the storage devices themselves.

The Applicant has observed that this phenomenon is even more pronounced in the continuous elongated elements reinforced with cords of textile type, but it can also be present in the continuous elongated elements with reinforcement cords of metallic type.

In particular, the Applicant has observed that the semifinished products thus produced tend to change their own form after the assembly thereof and/or after the building of the entire tyre due to the residual tensions accumulated in the material during the passage into the storage device. More particularly, the Applicant has observed that, for the tyres built on forming drums, said semifinished products tend to recover their original form after the deposition thereof on said forming drum.

For example, the Applicant has observed that the tyres comprising components obtained by winding the continuous elongated elements in axially adjacent or partially superimposed coils on the forming drum - once freed from the support on which they have been built - tend to be radially contracted (belting), giving rise to coverings with a maximum running diameter less than the design diameter.

Said continuous elongated element indeed tends to recover its initial length in longer times than that of the delivery, i.e. it is unable to recover its initial length, discharging said tensions, during the brief passage from the dynamic storage device to the device for the application on the forming drum.

The Applicant has observed that such stretching is due in part to the tension difference between the entrance and the exit of the elongated element into/from the dynamic storage device. This difference is necessary for maintaining taut the free sections of material, comprised for example between idle rollers positioned on crosspieces, and for advancing the continuous elongated element, overcoming the rolling friction of the rollers as well as the inertia of the same.

The Applicant has also observed that the passage of the continuous elongated element on the idle rollers of the storage device generates an undesired stretching in the elongated element itself.

In such context, the Applicant has felt the need to improve the productivity of the tyre building processes.

The Applicant has observed that, by increasing the length of the path inside the storage device, in a manner so as to arrange a greater quantity of continuous elongated element usable with every tyre building cycle, there is a further increase of the residual tensions within the continuous elongated element itself.

The Applicant has also observed that an increase of the advancing speed of the material within the path in the storage device, necessary for obtaining a greater delivery speed of the continuous elongated element and consequently a decrease of the building cycle time, involves a further stretching of the delivered material, since the rolling friction of the bearings, interposed between the rollers and the shafts on which they are mounted, increases with the speed.

The Applicant has finally observed that said stretching increases in a substantially linear manner starting from the entrance up to the exit of the continuous elongated element into/from the storage device and that therefore said stretching is greater the higher the number of idle rollers, or rather the length of the zigzag path, i.e. the capacity of the device in temporarily storing the elongated element.

The Applicant has perceived that, by controlling the friction between the rollers and the relative shafts on which they are mounted, it is possible to obtain a reduction of the internal longitudinal tension of the continuous elongated element.

The Applicant has finally found that by interrupting the progression of the longitudinal tension of the continuous elongated element in multiple points along the zigzag path, by means of a rotation imparted to each shaft or to at least several shafts on which relative rollers are idly mounted, it is possible to control the tension of the continuous elongated element at the outlet of the storage device and consequently considerably decrease the deformations, due to the residual tensions, of the continuous elongated element present in the built tyre.

More specifically, according to claim 1, the present invention relates to a method for controlling the delivery of a continuous elongated element in a process for building tyres for vehicle wheels.

According to a different aspect, the present disclosure relates to a process for building tyres for vehicle wheels.

Preferably it is provided to build a green tyre by forming its components on at least one forming drum.

Preferably it is provided to mould and vulcanise the green tyre.

Preferably forming at least one of the components of the green tyre comprises advancing a continuous elongated element towards the forming drum along a zigzag path defined by a plurality of rollers on which the continuous elongated element is partially wound, said plurality of rollers being mounted on a respective plurality of shafts.

Preferably forming at least one of the components of the green tyre comprises applying said continuous elongated element on said forming drum.

Preferably first rollers of said plurality of rollers are caused to rotate by means of a rotation imparted to respective first shafts.

According to claim 10, the present invention relates to an apparatus for controlling the delivery of a continuous elongated element in a process for building tyres for vehicle wheels.

Preferably at least one line is provided for building a green tyre on a forming drum.

The Applicant deems that by employing the solutions in accordance with the present invention, it is possible to assemble the semifinished products constituted by said continuous elongated element, reducing to the minimum the risk that they can change their form after the building of the tyre and alter the performances of the latter. The Applicant in fact deems that the action exerted by each first powered shaft prevents the friction between the roller and the shaft on which it is mounted and the inertia of the roller itself from generating an increase of longitudinal tension in the continuous elongated element, therefore allowing the limiting or even cancelling of the tension/deformation at the outlet of the zigzag path. The Applicant finally deems that it is possible to increase the movement speed in the dynamic storage device and/or the capacity thereof, still maintaining the tension/deformation at the outlet of the zigzag path zero or in any case very low.

The present invention, in at least one of the aforesaid aspects, can have one or more of the preferred characteristics that are described hereinbelow.

Preferably, the continuous elongated element comprises reinforcement threads. Preferably the reinforcement threads are textile, preferably polymer, preferably made of nylon. Preferably, the reinforcement threads are metallic.

Preferably, the reinforcement wires are longitudinally oriented along the lengthwise extension of the continuous elongated element.

Preferably, the continuous elongated element is wound around the forming drum in axially adjacent and/or partially superimposed circumferential coils, preferably for the building of belt structures at 0°.

The elongated elements provided with the reinforcement threads as described above and used for the indicated purpose are those which are most affected by the damaging phenomena due to the generation of residual longitudinal tensions/deformations.

In one embodiment, first rollers of said plurality of rollers are idly mounted on the respective first shafts.

Preferably, the rotation of the first rollers is generated by the friction between said first rollers and the respective first shafts on which they are idly mounted. Preferably, the first rollers are idly mounted on the respective first shafts and driven in rotation via friction by said first shafts.

Preferably, bearings are radially interposed between the first rollers and the first shafts. The abovementioned friction is the friction that is generated between the movable parts of the bearings.

The Applicant deems that by exploiting the friction existing between each first roller and the shaft on which it is mounted, which in the apparatuses of known type is the main cause of the undesired increase of longitudinal tension in the continuous elongated element, it is possible to partially transmit the rotation of the shafts to the rollers.

In addition, since, apart from the friction, the first rollers are free to rotate around the respective first shafts, the system allows supporting the possible local speed fluctuations of the continuous elongated element, In other words, the rotational independence of the various rollers is maintained in a manner so as to manage possible micro-variations of speed between the same.

It follows that it is no longer necessary to use special low-friction bearings and/or very small, weak shafts that mount small bearings in order to minimise said friction. It is instead possible to use bearings of standard type, less costly, and provided with protection screens (which extend the lifetime thereof and make the apparatus safer), since the "braking" effect generated by the same screens is partially or entirely compensated for by the first shafts in rotation.

Preferably, the diameter of the shafts is comprised between about 10 mm and about 30 mm. This diameter is such to ensure a sufficient strength so that the shafts are not bent under the loads generated by the continuous elongated element, even in the case of sudden peaks due to an irregular operation of the apparatus.

The solution according to the invention is also structurally very simple and effective and avoids the use of sophisticated electronic systems for controlling the powering of the shafts.

In addition, the speed of the first rollers driven by the first shafts is self-regulated because the friction increases exponentially with the speed.

Preferably, an advancing speed of the continuous elongated element along the zigzag path is greater than about 100 m/min, more preferably equal to about 120 m/min.

Preferably, the advancing speed of the continuous elongated element along the zigzag path is greater than about 300 m/min, more preferably greater than about 400 m/min. These speeds are such to respect the cycle time for building a tyre, both in conventional building processes and building processes that provide for the deposition of the semifinished products on forming drums.

Preferably, all the shafts are powered, i.e. all the shafts are first shafts. This signifies that none of the rollers on which the continuous elongated element is partially wound exerts a braking action such to increase the longitudinal tension thereof.

Preferably, second shafts of said plurality of shafts are mounted fixed on respective supports. The second non-powered shafts are fixed and the respective rollers idly rotate around them. The increase of longitudinal tension at each of the second non-powered shafts can be partially lowered or cancelled at the first powered shafts.

Preferably, the first shafts are caused to rotate with an angular speed equal to the ratio between an advancing speed of the continuous elongated element and the radius of a radially outer surface of the first rollers. In other words, said angular speed of the powered shaft is equal to the angular speed that a first roller (mounted thereon) would have if it rotated with a peripheral linear speed substantially equal to the advancing speed of the continuous elongated element. Hence, with "R" the radius of the radially outer surface of the first roller and "V" the advancing speed of the continuous elongated element, said angular speed "ω" of the first shaft is equal to the ratio "V"/"R". In this situation, the first rollers mounted on the first powered shafts do not transmit any longitudinal force to the continuous elongated element (tangential to its radially outer surfaces). The continuous elongated element is neither retained nor thrust by said first rollers.

Preferably, the first shafts are caused to in rotate with an angular speed greater than the ratio between an advancing speed of the continuous elongated element and the radius of a radially outer surface of the first rollers. In this situation, the first rollers mounted on the powered shafts transmit a longitudinal thrust force to the continuous elongated element, the size of such force depending on how much greater said angular speed is with respect to said ratio.

By selecting said angular speed, it is possible to maintain the longitudinal tension (equal to the ratio between the longitudinal force and the section area of the continuous elongated element) of the continuous elongated element entering into the zigzag path equal to the longitudinal tension exiting from said zigzag path or even reducing said longitudinal tension at the outlet with respect to that at the inlet. In general, it is possible to control the size of the reduction by varying the rotation speed of the powered shafts.

Preferably, said longitudinal thrust force transmitted to the continuous elongated element by each first roller mounted on a first powered shaft is comprised between about 0,5 N and 8 N.

Preferably, the longitudinal traction force exerted on the continuous elongated element at an outlet of said continuous elongated element from the zigzag path is less than about 20 N, more preferably equal to about 0N.

Such values allow limiting/cancelling the elastic return of the continuous elongated element in the subsequent steps of the process and/or in the finished tyre.

Preferably, the difference of longitudinal traction force exerted on the continuous elongated element between an outlet of said continuous elongated element from the zigzag path and an inlet into the zigzag path is less than about 10N, more preferably equal to 0N. This signifies that the dynamic storage device has a negligible effect on the longitudinal tensions/deformations of the continuous elongated element.

Preferably, the longitudinal traction force exerted on the continuous elongated element at an inlet of said continuous elongated element into the zigzag path is greater than about 10 N, more preferably equal to about 20 N. Such value of the longitudinal traction force in inlet ensures that the continuous elongated element maintains the engagement with the rollers and remains guided along the zigzag path. The excessive decrease or cancellation of the longitudinal traction force along the zigzag path would in fact lead to the slipping of the elongated element from the rollers and hence to the stopping of the apparatus.

Preferably, the (first and second) rollers are structured in a manner so as to confer a static longitudinal traction force (and hence a static longitudinal tension equal to the ratio between the longitudinal traction force and the section area of the continuous elongated element) to the continuous elongated element wound thereon. Such effect is obtained, for example, by moving the rollers away from each other. The abovementioned static longitudinal traction force is present even when the elongated element is immobile on the rollers, i.e. it does not advance in the feed direction, and the value of the static longitudinal traction force is constant for the entire length of said element.

When however, in the devices of known type, the continuous elongated element is in motion, one adds/subtracts to the longitudinal traction force the longitudinal traction force due to the driving operated downstream of the zigzag path and due to the forces exchanged with the rollers and distributed along said zigzag path. It follows that the total longitudinal traction force (given by the mutual moving apart action of the rollers, by the forces of inertia and of friction locally exerted by the rollers and by the driving operated downstream) in the moving continuous elongated element grows progressively, in steps, but in a substantially linear manner starting from the inlet up to the outlet into/from the dynamic storage device. At an initial section (inlet) of the zigzag path, the total longitudinal traction force is less than the static longitudinal traction force and at a final section (outlet) of the zigzag path said total longitudinal traction force is greater than the static longitudinal traction force.

The Applicant deems that employing the solutions according to the present invention simultaneously allows the following: increasing the longitudinal traction force at the inlet and decreasing or even cancelling such force at the outlet, given the same imparted static longitudinal traction force.

Preferably, at least one motor is operatively connected to one or more of said first shafts.

Preferably, multiple first shafts are driven by means of a single motor. More preferably, all the first powered shafts are driven by means of a single motor. The use of a motor for moving multiple shafts allows limiting the apparatus manufacturing and maintenance costs. This solution is particularly effective if the first rollers are idly mounted on the respective first powered shafts and driven in rotation via friction by said powered shafts, since the first rollers maintain their rotational independence even if being moved by a single motor.

Preferably, a flexible transmission element connects the motor to said first shafts. The transmission is obtained with a belt, preferably toothed, or with a transmission chain, or with an elastic cord, or with other suitable connection elements. Preferably, a pulley is integral in rotation with each of the first shafts. Preferably, the flexible transmission element is partially wound around said pulleys. The transmission obtained in this manner is simple, light and relatively inexpensive. Preferably, a plurality of transmission rollers are engaged by the flexible transmission element. The transmission rollers allow shaping the path of the flexible element in a manner so as to partially wind it around each of the pulleys, in order to ensure an improved grip on said pulleys and assure the motion transmission.

Preferably, the rollers, powered or otherwise, are organised into at least two axially approached groups, with reference to an axial direction parallel to rotation axes of said rollers, wherein each of said at least two groups defines one of said successive sections. In other words, the rollers of one group define a respective section of the zigzag path. The rollers of each group are substantially arranged on a same plane and different groups are arranged on planes that are parallel and side-by-side. Therefore, the zigzag path is extended in a winding manner on a first plane and then subsequently on a different plane parallel and side-by-side the first and possibly on a third plane and so forth. Such solution allows limiting the linear size of the temporary storage device.

Preferably, each shaft carries multiple rollers that are axially aligned with each other. Each roller of a shaft is part of one of said groups. In other words, each rotation shaft, to which a rotation axis corresponds, carries - axially adjacent to each other - an idle roller of a first group, an idle roller of a second group, etc. Such solution is simple and inexpensive since the different sections of the elongated element make use of the same shafts multiple times. In addition, such solution ensures that the sections are always aligned with each other without having to also manage the control of the fill factor of each single section.

Preferably, said rollers are organised in three axially approached groups so that each rotation shaft carries three rollers.

Preferably, the dynamic storage device comprises:
an upper support bar carrying upper rollers of said plurality of rollers;
a lower support bar carrying lower rollers of said plurality of rollers;
wherein the first shafts support the upper rollers and/or the lower rollers.

The continuous elongated element passes in succession from a roller of the upper support bar to a roller of the lower support bar in a manner so as to define said zigzag path.

Preferably, the powered shafts or first shafts are all those of the upper support bar. Preferably, the upper support bar and the lower support bar are horizontal and are vertically movable along a vertical support guide constrained to a base. Preferably, the support guide has an elongated vertical shape and the two bars are slidably constrained thereto at central portions thereof.

Preferably, each of the two support bars is extended along a main extension direction, preferably horizontal, between a first side and a second side of the dynamic storage device.

Preferably, the abovementioned lower support bar carries its shafts with the parallel axes aligned along the main extension direction which is orthogonal to said shafts. Preferably, the abovementioned upper support bar carries its shafts with the parallel axes aligned along the main extension direction of the bar which is orthogonal to said shafts.

Preferably, the shafts of the lower support bar are vertically non-aligned with respect to those of the upper support bar.

Preferably, movement mechanisms operatively engaged with the upper and lower support bars and with the support guide are able to vertically move said support bars, preferably in an independent manner with respect to each other.

Preferably, during the operation of the dynamic storage device while the elongated element advances along the zigzag path, the upper support bar is maintained fixed while the lower support bar is moved with a vertical movement depending on the mode of use. If the dynamic storage device is only storing (no exiting material) the lower support bar is moved downward, away from the upper support bar with a speed proportional to the entrance speed of the continuous elongated element. If the dynamic storage device is only releasing (no entering material) the lower support bar is moved closer to the upper support bar with a speed proportional to the entrance speed of the continuous elongated element. If the dynamic storage device is working simultaneously with the continuous elongated element moving, both entering and exiting, the lower support bar is moved the extent necessary to compensate for the possible differences of speed between entering material and exiting material. If the speeds of the entering and exiting continuous elongated element are equal, also the lower support bar remains stopped.

Preferably, the weight of the lower bar, possibly partially compensated for by the action of the abovementioned movement mechanisms, serves to impart the abovementioned static longitudinal traction force to the continuous elongated element.

Preferably, the upper support bar and the lower support bar have a comb-like shape comprising a plurality of appendages (prongs of the comb) each carrying a shaft. Such shape allows arranging the two support bars in a drawing-in configuration with its appendages mutually penetrated and the rollers of one bar placed between the appendages of the other. In this manner, the vertical position of the lower rollers and the upper rollers is switched, the lower rollers come to be found above the upper rollers. In such configuration, the continuous elongated element is very simply drawn in, by making it pass along one or more rectilinear sections between the inverted lower rollers and upper rollers and then by vertically moving the bars and bringing the lower rollers downward and the upper rollers upward. Such movement arranges the elongated element in a zigzag manner, like a festoon.

Preferably, at least one motor and at least one flexible transmission element, connecting the motor to the first shafts, are mounted on the support bar carrying said first shafts.

Preferably, transmission rollers are engaged by the flexible transmission element and mounted between the appendages.

Preferably, each transmission roller is mounted to the base of the prongs of the comb between two adjacent first powered shafts.

By means of the transmission rollers, the path of the flexible transmission element follows the comb-like shape of the respective support bar.

Preferably, the length of the zigzag path and of the elongated element arranged along the same is comprised between about 15m and about 140m, more preferably equal to about 110m. Such length is sufficient for completing a tyre building cycle even if upstream the feeding of the elongated element is interrupted. This allows avoiding an interruption in the delivery of the continuous elongated element which can generate defects on the built tyre and have as a consequence the scrapping of the finished product.

Preferably, the number of rollers is comprised between about 15 and about 110, more preferably equal to about 60. Such number of rollers allows managing high lengths such as those mentioned above while maintaining the device compact. Further characteristics and advantages will be clearer from the detailed description of a preferred but not exclusive embodiment of an apparatus and a process for building tyres for vehicle wheels in accordance with the present invention.

Such description will be set forth hereinbelow with reference to the set of drawings, provided only for exemplifying and hence non-limiting purposes, in which:
- figure 1 shows a top schematic view of a plant for manufacturing tyres for vehicle wheels according to the present invention;
- figure 2 shows an elevation view of a device belonging to the plant of figure 1 and of a section of a continuous elongated element managed by said device;
- figure 3 shows an enlarged portion of the device of figure 2;
- figure 4 shows a side view of a portion of the device of figure 2;
- figure 5 shows an enlarged element of the portion illustrated in figure 4;
- figure 6 is a radial half-section of a tyre for vehicle wheels obtained with the process and the apparatus of the present invention;
- figure 7 shows a perspective view in section of the continuous elongated element in a preferred embodiment.

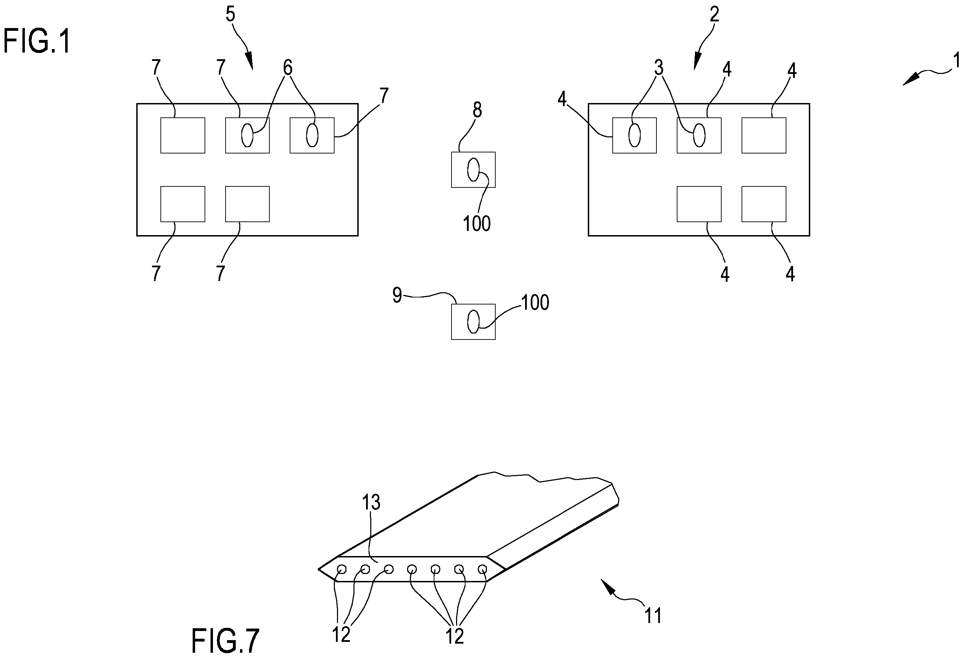

With reference to figure 1, reference number 1 indicates overall a plant for manufacturing tyres 100 for vehicle wheels in accordance with the present invention,

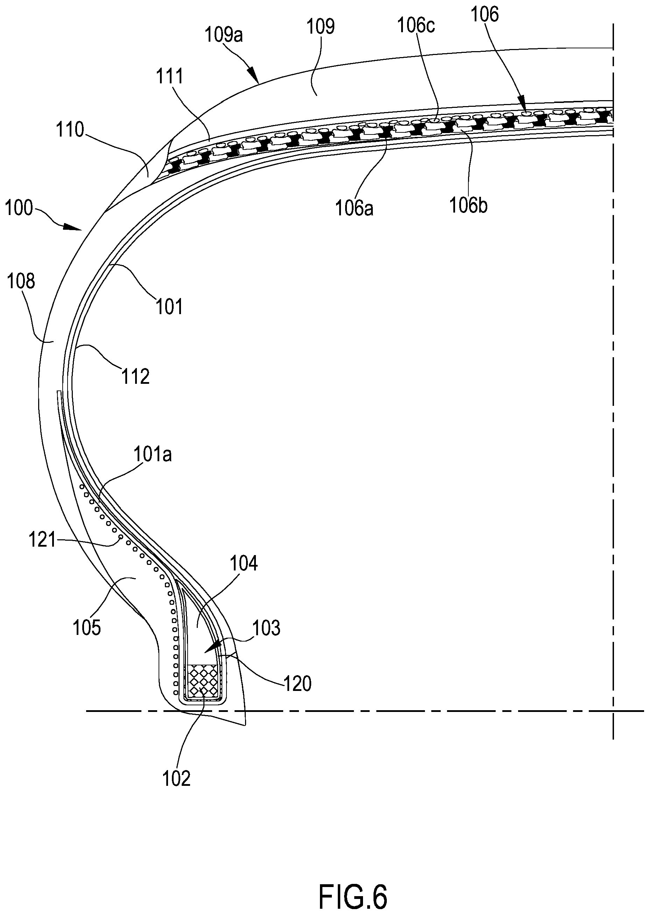

A tyre 100, obtained in said plant and according to the method and the process in accordance with the present invention, is illustrated in figure 6 and comprises at least one carcass structure, comprising at least one carcass layer 101 having respectively opposite terminal edges engaged with respective annular anchoring structures 102, termed bead cores, possibly associated with a bead filler 104. The zone of the tyre comprising the bead core 102 and the bead filler 104 forms a bead structure 103, intended for anchoring the tyre on a corresponding mounting rim, not illustrated.

Each bead structure is associated with the carcass structure by means of the backward folding of the opposite lateral edges of the at least one carcass layer 101 around the annular anchoring structure 102 in a manner so as to form the so-called carcass flaps 101a.

An anti-abrasive strip 105 obtained with elastomeric material can be arranged in an external position of each bead structure 103.

The carcass structure is associated with a belt structure 106 comprising one or more belt layers 106a, 106b situated in radial superimposition with respect to each other and with respect to the carcass layer, having metallic or textile reinforcement cords. Such reinforcement cords can have crossed orientation with respect to a circumferential extension direction of the tyre 100. By "circumferential" direction, it is intended a direction generically directed according to the tyre rotation direction. In radially more external position with respect to the belt layers 106a,106b, at least one zero-degree reinforcement layer 106c can be applied, commonly known as "0° belt", which generally incorporates a plurality of reinforcement cords, typically textile cords, oriented in a substantially circumferential direction, thus forming an angle of only a few degrees (for example an angle between about 0° and 6°) with respect to the equatorial plane of the tyre, and covered with an elastomeric material.

In radially outer position with respect to the belt structure 106, a tread band 109 is applied that is made of elastomeric compound, like other semi-finished products forming the tyre 100. Respective sidewalls 108 made of elastomeric compound are also applied in axially outer position on the lateral surfaces of the carcass structure, each being extended from one of the lateral edges of the tread 109 up to the respective bead structure 103. In radially outer position, the tread band 109 has a rolling surface 109a intended to come into contact with the ground. Circumferential grooves, which are connected by transverse notches in a manner so as to define a plurality of blocks of various shape and size distributed on the rolling surface 109a, are generally obtained in this surface 109a, which for the sake of simplicity in figure 9 is represented smooth.

An underlayer 111 can possibly be arranged between the belt structure 106 and the tread band 109. A strip constituted by elastomeric material 110, commonly known as "mini-sidewall", can possibly be present in the zone of connection between the sidewalls 108 and the tread band 109, this mini-sidewall being generally obtained by means of co-extrusion with the tread band 109 and allowing an improvement of the mechanical interaction between the tread band 109 and the sidewalls 108. Preferably the end portion of the sidewall 108 directly covers the lateral edge of the tread band 109.

In the case of tyres without air chamber, a rubber layer 112 - generally known as "liner", which provides the necessary impermeability to the inflation air of the tyre - can be provided in a radially inner position with respect to the carcass layer 101. The rigidity of the tyre sidewall 108 can be improved by equipping the tyre bead structure 103 with a reinforcement layer 120 generally known as "flipper" or additional strip-like insert. The "flipper" 120 is a reinforcement layer which is wound around the respective annular anchoring structure 102 and the bead filler 104 in a manner so as to at least partially surround them, said reinforcement layer being arranged between the at least one carcass layer 101 and the bead structure 103. Normally, the "flipper" is in contact with said at least one carcass layer 101 and said bead structure 103. The "flipper" 120 typically comprises a plurality of metallic or textile cords (e.g. made of aramid or rayon) incorporated in a cross-linked elastomeric material.

The tyre bead structure 103 can comprise a further protection layer that is generally known with the term "chafer" 121 or protection strip and which has the function of increasing rigidity and integrity of the bead structure 103. The "chafer" 121 usually comprises a plurality of cords incorporated in a cross-linked elastomeric material. The cords are generally made of textile materials (e.g. aramid or rayon) or of metallic materials (e.g. steel cords).

The abovementioned components of the tyre 100 are obtained on one or more drums by moving said drums between different stations for supplying semifinished products; at each station, suitable devices apply the aforesaid semifinished products on the drum(s).

The plant 1, schematically illustrated in its entirety in the enclosed figure 1, comprises a carcass building line 2, at which forming drums 3 are moved between different stations for supplying semifinished products 4; such stations 4 are arranged to form, on each forming drum 3, a carcass sleeve comprising the carcass plies 101, the liner 112, the annular anchoring structures 102, the "flippers" 120, the "chafers" 121 and possibly at least one part of the sidewalls 108. Simultaneously, in an external sleeve building line 5, one or more auxiliary forming drums 6 are sequentially moved between different work stations 7 arranged to form an external sleeve on each auxiliary drum 6; such external sleeve comprising at least the belt structure 106, the tread band 109, and possibly at least one part of the sidewalls 108.

The plant 1 also comprises an assembly station 8, at which the external sleeve is coupled to the carcass sleeve, in order to define the built green tyre 100.

The built green tyres 100 are finally transferred to at least one shaping, moulding and vulcanising unit 9.

In at least one of the work stations 7 of the external sleeve building line 5, an apparatus can be provided for delivering a continuous elongated element 11 made of elastomeric material, which provides for delivering and applying said continuous elongated element 11 on a radially outer surface with respect to an auxiliary forming drum 6 according to axially side-by-side and/or partially superimposed circumferential coils, in order to form the zero-degree reinforcement layer 106c of the belt structure 106 of the tyre 100.

The continuous elongated element 11 (illustrated in detail in figure 7) comprises a plurality of parallel and side-by-side reinforcement cords 12 immersed in an elastomeric material matrix 13.

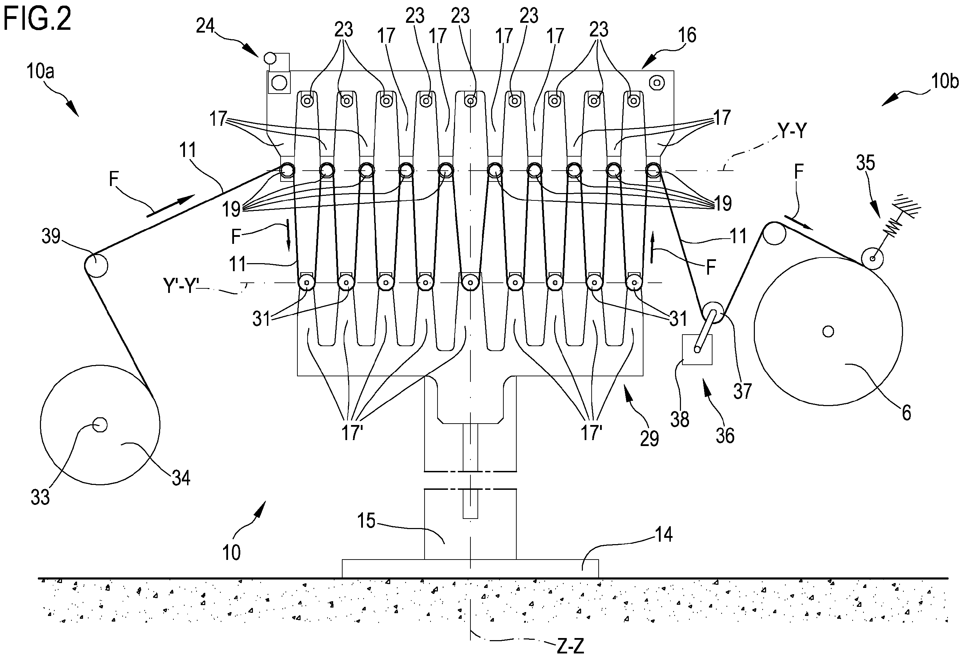

The delivery apparatus (illustrated in figures 2 to 5) comprises a dynamic storage device 10 capable of housing and advancing a section of the continuous elongated element 11 like a festoon along a zigzag path.

The dynamic storage device 10 comprises a base 14 from which a support guide 15 shaped like a column is extended along a vertical axis "Z-Z".

An upper support bar 16, having a main extension along a horizontal axis "Y-Y", i.e. orthogonal to the support guide 15, is constrained to the support guide 15 in a manner so as to be able to vertically slide along the abovementioned vertical axis "Z-Z". The upper support bar 16 is constrained to the support guide 15 at an intermediate portion thereof. The upper support bar 16 has a plurality of appendages 17 (ten in the illustrated embodiment) that are extended towards the base 14 in a manner so as to confer a shape similar to that of a comb to the bar 16 itself.

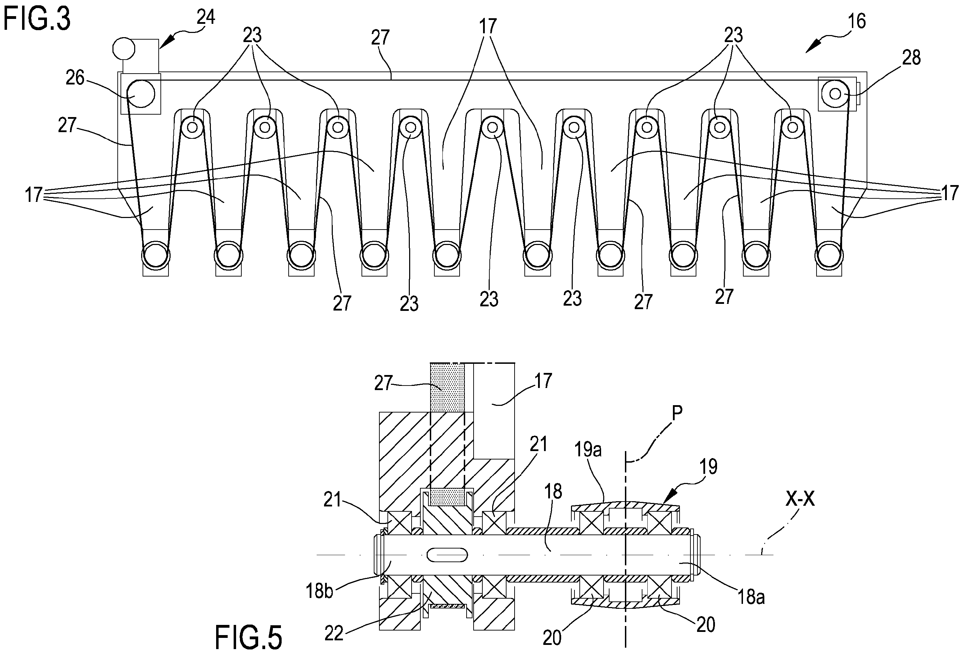

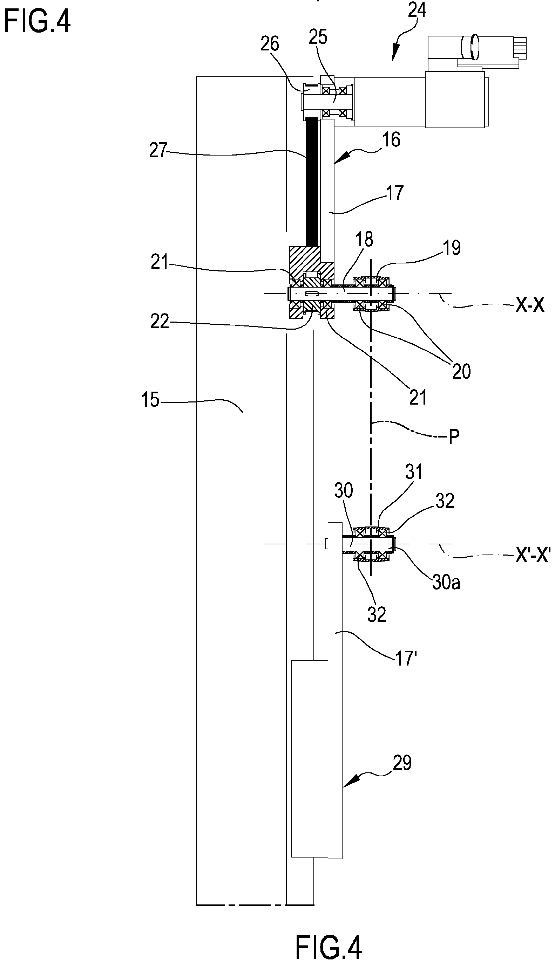

Each of the appendages 17 carries, at a terminal end thereof, a first powered shaft 18 (visible in figures 4 and 5) which is extended along a corresponding main rotation axis "X-X" perpendicular both to the abovementioned vertical axis "Z-Z" and to the abovementioned horizontal axis "Y-Y". The first powered shafts 18 of the upper support bar 16 are mutually side-by-side at regular intervals along the abovementioned horizontal axis "Y-Y". The first powered shafts 18 have, for example, a diameter of about 18mm. Each of the first powered shafts 18 of the upper support bar 16 carries, at a first end 18a thereof, a first upper roller 19 idly mounted on said powered shaft 18 by means of two bearings 20. The first upper rollers 19 are preferably all identical. Each of the first powered shafts 18 of the upper support bar 16 is mounted on the respective appendage 17 in a rotatable manner by means of a pair of bearings 21 installed at a second end 18b of said first powered shaft 18 opposite the first end 18a. On the first shaft 18, a pulley 22 is also mounted that is integral in rotation with said first shaft 18 and preferably axially arranged between said two bearings 21. As is visible in figure 5, each first upper roller 19 has a convex radially outer surface 19a. Alternatively, each upper roller 19 can have a concave radially outer surface 19a.

The upper support bar 16 carries a plurality of transmission rollers 23, each situated between two adjacent appendages 17 and at a base of said appendages 17 opposite the terminal end which carries the first powered shafts 18. The transmission rollers 23 are idly mounted around respective axes parallel to the main rotation axes "X-X" of the first powered shafts 18.

An electric motor 24 is installed on the upper support bar 16 and has a drive shaft 25 parallel to the main rotation axes "X-X" of the first powered shafts 18 and provided with a drive pulley 26.

The drive pulley 26, the transmission rollers 23 and the pulleys 22 of the first powered shafts 18 are positioned on one side of the support bar 16 (which is substantially a plate) preferably opposite that which has the rollers 19.

A flexible transmission element 27, for example a belt, (figures 3, 4 and 5) partially winds around the drive pulley 26, the transmission rollers 23 and the pulleys 22 of the first powered shafts 18 in order to transmit the motion from the motor 24 to each of said first powered shafts 18. More in detail, the transmission belt 27 has a winding portion, formed by rectilinear sections connected by curvilinear sections, which follows the comb-like profile of the upper support bar 16, engaging from below each pulley 22 carried by the first powered shafts 18 and engaging from above each transmission roller 23. The transmission belt 27 also has a rectilinear portion arranged above the transmission rollers 23 and parallel to the horizontal axis "Y-Y". The rectilinear portion is extended between the drive pulley 26 and an auxiliary transmission pulley 28.

The support guide 15 is also constrained, in a manner such that it can vertically slide along the abovementioned vertical axis "Z-Z", to a lower support bar 29 which also has a main extension along a horizontal axis "Y'-Y"', i.e. orthogonal to the support guide 15. The lower support bar 29 is arranged below the upper support bar 16 and it too is constrained to the support guide 15 at an intermediate portion thereof.

In a manner similar to the upper support bar 16, also the lower support bar 29 has a plurality of appendages 17' (nine in the illustrated embodiment) that are however extended upward, i.e. towards the upper support bar 16, in a manner so as to confer it a shape similar to that of a comb.

Each of the appendages 17' of the lower support bar 29 carries a second shaft 30 (visible in figure 4) which is extended along a corresponding rotation axis "X'-X"' perpendicular both to the abovementioned vertical axis "Z-Z" and to the abovementioned horizontal axis "Y'-Y"'. The second shafts 30 of the lower support bar 29 are mutually side-by-side at regular intervals along the abovementioned horizontal direction "Y'-Y"'. The second shafts 30 of the lower support bar 29 are mounted fixed (without the possibility of rotating) on the terminal ends (which therefore constitute the supports of the second shafts) of the respective appendages 17'. Each of the second fixed shafts 30 of the lower support bar 29 carries, at a first end 30a thereof, a second lower roller 31 idly mounted on said second shaft 30 by means of two bearings 32. The second lower rollers 31 are preferably all identical.

As is visible in figure 2, the first upper rollers 19 are vertically non-aligned with the second lower rollers 31. In other words, each of the second lower rollers 31 is aligned, along a vertical direction, with a space delimited between two adjacent first upper rollers 19 or, in other words, each of the appendages 17 of the upper support bar 16 faces between two appendages 17' of the lower support bar 29.

In the embodiment illustrated in figures 2, 3 and 4, the zigzag path of the continuous elongated element 11 substantially lies in a single plane "P", shown in figures 4 and 5, passing through an axially central portion of the radially outer surface 19a of the upper and lower rollers 19, 31; on such central portion, the continuous elongated element 11 is abutted.

In a non-illustrated variant embodiment, each of the first powered shafts 18 and second fixed shafts 30 carries multiple rollers 19, 31 axially arranged one after the other to form respective groups, each corresponding with a respective plane. A section of the zigzag path lies in each of such planes. The continuous elongated element at the end of a first section in a first plane is guided onto a second section on an adjacent plane and so forth.

Movement mechanisms that are *per se* known, and thus are not illustrated or described herein, are capable of moving the support bars 16, 29 along the support guide 15.

The illustrated delivery apparatus further comprises a support pin 33 positioned on a first side 10a of the dynamic storage device 10, adapted to receive a feed reel 34 of the continuous elongated element 11.

The delivery apparatus comprises an applicator 35 (for example an applicator roller) positioned on a second side 10b of the dynamic storage device 10 and operatively active on the forming drum 6 in order to apply the continuous elongated element 11 on said forming drum 6.

Between the dynamic storage device 10 and the applicator 35, an extraction device 36 is present which comprises an extraction roller 37 coupled to an extraction motor 38.

As is illustrated in figure 2, the continuous elongated element 11 unwound from the reel 34 is partially wound around a first upper guide roller 39 and then ascends towards a first upper end roller 19 close to the first side 10a.

After having past over the first upper roller 19, the continuous elongated element 11 descends towards a first lower end roller 31 close to the first side 10a before then re-ascending towards a subsequent first upper roller 19 and it continues in its winding path up to a first upper end roller 19 close to the second side 10b, thus defining the zigzag path.

During use and in accordance with the process and the method of the present invention, in order to arrange the continuous elongated element 11 in the temporary storage device 10, the movement mechanisms move the upper support bar 16 and the lower support bar 29 into a mutually approached drawing-in configuration in which the appendages 17, 17' of the two support bars 16, 29 are mutually penetrated. In such configuration, the rollers of one support bar are placed between the appendages of the other. In this manner, the vertical position of the second lower rollers 31 and the first upper rollers 19 is switched, the second lower rollers 31 come to be situated above the first upper rollers 19. In such configuration, the continuous elongated element 11 is made to pass along a rectilinear section between the inverted second lower rollers 31 and first upper rollers 19. At this point, the movement mechanisms move the upper support bar 16 away from the lower support bar 29 (or vice versa) and bring the second lower rollers 31 downward and the first upper rollers 19 upward. Such movement makes the continuous elongated element 11 assume the zigzag shape like a festoon. Preferably, the upper support bar 16 is locked on the support guide 15 and it is the lower support bar 29 to be moved away.

The extraction device 36 is screwed and starts to draw the continuous elongated element 11, extracting it from the dynamic storage device 10, while at the inlet between the reel 34 and said dynamic storage device 10, a feed device can be present (not illustrated) which unwinds said elongated element 11 from the reel 34 and feeds it to the dynamic storage device 10.

When the dynamic storage device is in operation, the support bars 16, 29 normally have a small or large relative movement with respect to each other, which depends on the mode of use. If the dynamic storage device 10 is only storing (no exiting material drawn by the extraction device 36), the lower support bar 29 is moved downward away from the upper support bar 16. If the dynamic storage device 10 is only releasing (no entering material fed by the reel 34), the lower support bar 29 is moved closer to the upper support bar 16. If the dynamic storage device 10 is working simultaneously with the continuous elongated element 11 moving, both entering and exiting, the lower support bar 29 is moved the extent necessary to compensate for the possible differences of speed between entering material and exiting material. If the entering and exiting speeds of the continuous elongated element 11 are equal, also the lower support bar 29 remains stopped. Preferably, the weight of the lower support bar 29, possibly partially compensated for by the action of the abovementioned movement mechanisms, serves to impart a static tension to the continuous elongated element 11.

The continuous elongated element 11, with its movement, drives in rotation the second lower rollers 31. The electric motor 24 moves the first powered shafts 18 of the upper support bar 16 in a rotation sense in accordance with a feed direction "F" of the continuous elongated element 11. The first powered shafts 18 drive via friction, in rotation in the same sense, the first upper rollers 19 which accompany the advancement of the continuous elongated element 11 but are not substantially driven by it. Rather, if the angular speed "ω" of rotation of the first powered shafts 18 is greater than the ratio between an advancing speed of the continuous elongated element 11 and the radius of a radially outer surface of the first upper rollers 19, then said first upper rollers 19 apply a longitudinal thrust force to the continuous elongated element 11 in the feed direction "F". Then, the first upper rollers 19 are capable of cancelling the increase of longitudinal tension of the continuous elongated element 11 generated by the driven second lower rollers 31 or even reducing the longitudinal traction force at the outlet (Tₒᵤₜ) from the zigzag path with respect to the longitudinal traction force at the inlet (Tᵢₙ) into the zigzag path.

For example, the continuous elongated element is made to advance along the zigzag path with an advancing speed of about 400m/min. The longitudinal force, which is opposed to the motion of the continuous elongated element due to the friction and inertia of each of the nine second lower rollers 31 combined with the second fixed shafts 30, is equal to about 1N. The longitudinal thrust force exerted by each of the ten first upper rollers 19 combined with the first powered shafts 18 is equal to about 1N. The longitudinal traction force at the inlet Tᵢₙ is equal to about 20N. The longitudinal traction force at the outlet Tₒᵤₜ is equal to about 19N. The difference of longitudinal traction force exerted on the continuous elongated element between an outlet of said continuous elongated element from the zigzag path and an inlet into the zigzag path is equal to about -1N. The longitudinal tension "σᵢₙ" of the continuous elongated element 11 entering into the zigzag path is greater than the longitudinal tension "σₒᵤₜ" exiting from said zigzag path.

## Claims

1. Method for controlling the delivery of a continuous elongated element in a process for building tyres for vehicle wheels, comprising:
- arranging a continuous elongated element (11) along a zigzag path defined by a plurality of rollers (19, 31) on which the continuous elongated element is partially wound;
- advancing the continuous elongated element (11) in a feed direction (F) along said zigzag path;
- maintaining the longitudinal tension (σ_{d}) in the continuous elongated element (11) downstream of first rollers (19) of said plurality of rollers (19, 31) less than or equal to the longitudinal tension (σᵤ) upstream of said first rollers (19), by causing rotation of said first rollers (19) in the sense in accordance with said feed direction (F);
- delivering said continuous elongated element at a work station (7) for building tyres.

2. Method as claimed in claim 1, wherein the rotation of the first rollers (19) is generated by the friction between said first rollers (19) and corresponding first shafts (18) on which they are idly mounted.

3. Method as claimed in claim 1 or 2, wherein a longitudinal thrust force transmitted by each first roller (19, 31) to the continuous elongated element (11) is comprised between 0,5N and 8N.

4. Method as claimed in claim 1, 2 or 3, comprising: maintaining the longitudinal tension (σᵢₙ) of the continuous elongated element (11) entering into the zigzag path equal to or greater than the longitudinal tension (σₒᵤₜ) exiting from said zigzag path.

5. Method as claimed in one of the claims from 1 to 4, wherein a longitudinal traction force (Tₒᵤₜ) exerted on the continuous elongated element (11) at an outlet of said continuous elongated element (11) from the zigzag path is less than 20N.

6. Method as claimed in one of the claims from 1 to 5, wherein a difference of longitudinal traction force (ΔT) exerted on the continuous elongated element (11) between an outlet of said continuous elongated element (11) from the zigzag path and an inlet into the zigzag path is less than 10N.

7. Method as claimed in one of the claims from 1 to 6, wherein a longitudinal traction force (Tᵢₙ) exerted on the continuous elongated element (11) at an inlet of said continuous elongated element (11) into the zigzag path is greater than about 10N.

8. Method as claimed in claim 1 or 2, comprising: causing rotation of the first shafts (18) with an angular speed (ω) equal to or greater than the ratio between an advancing speed (V) of the continuous elongated element (11) and the radius of a radially outer surface (19a) of the first rollers (19).

9. Method as claimed in claim 1, wherein an advancing speed (V) of the continuous elongated element (11) along the zigzag path is greater than 400 m/min.

10. Apparatus for controlling the delivery of a continuous elongated element in a process for building tyres for vehicle wheels, comprising:
- a dynamic storage device (10) comprising a plurality of rollers (19, 31) mounted on a plurality of shafts (18, 30), said rollers (19, 31) defining a zigzag path for said continuous elongated element (11);
- at least one feed reel (34) on which said continuous elongated element (11) is wound, said reel (34) being placed upstream of the dynamic storage device (10); **characterized in that** first shafts (18) of said plurality of shafts (18, 30) are powered to be rotated around respective main axes (X-X), in a sense in accordance with a feed direction (F) of the continuous elongated element (11) through said path.

11. Apparatus as claimed in claim 10, wherein first rollers (19) of said plurality of rollers (19, 31) are idly mounted on the respective first shafts (18).

12. Apparatus as claimed in claim 11, wherein bearings (20) are radially interposed between the first rollers (19) and the first shafts (18).

13. Apparatus as claimed in one of the preceding claims 10 to 12, comprising at least one motor (24) operatively connected to one or more of said first shafts (18).

14. Apparatus as claimed in one of the preceding claims 10 to 13, wherein the dynamic storage device (10) comprises:
an upper support bar (16) carrying upper rollers (19) of said plurality of rollers (19, 31);
a lower support bar (29) carrying lower rollers (31) of said plurality of rollers (19, 31);
wherein the first shafts (18) support the upper rollers (19) and/or the lower rollers (31).

15. Apparatus as claimed in the preceding claim, wherein the upper support bar (16) and the lower support bar (29) have a comb-like shape comprising a plurality of appendages (17, 17'), each carrying a shaft (18, 30); wherein at least one motor (24) and at least one flexible transmission element (27), connecting the motor (24) to the first shafts (18), are mounted on the support bar (16) carrying the first shafts (18).

## Patentansprüche

1. Verfahren zur Steuerung der Zufuhr eines durchgehenden länglichen Elements in einem Verfahren zur Fertigung von Reifen für Fahrzeugräder, wobei das Verfahren umfasst:
- Anordnen eines durchgehenden länglichen Elements (11) entlang eines zickzackförmigen Pfads, der durch eine Vielzahl von Laufrollen (19, 31), auf welche das durchgehende längliche Element teilweise gewickelt ist;
- Vorschieben des durchgehenden länglichen Elements (11) in einer Zuführrichtung (F) entlang des zickzackförmigen Pfads;
- Halten der Längsspannung (σ_{d}) in dem durchgehenden länglichen Element (11) stromabwärts von ersten Laufrollen (19) der Vielzahl von Laufrollen (19, 31) kleiner oder gleich der Längsspannung (σᵤ) stromaufwärts der ersten Laufrollen (19), indem die Drehung der ersten Laufrollen (19) in der Richtung in Übereinstimmung mit der Zuführrichtung (F) veranlasst wird;
- Abliefern des durchgehenden länglichen Elements an einer Arbeitsstation (7) zur Fertigung von Reifen.

2. Verfahren nach Anspruch 1, wobei die Drehung der ersten Laufrollen (19) durch die Reibung zwischen den ersten Laufrollen (19) und entsprechenden ersten Wellen (18), an denen sie nicht angetrieben montiert sind, erzeugt wird.

3. Verfahren nach Anspruch 1 oder 2, wobei eine Längsschubkraft, die durch jede erste Laufrolle (19, 31) auf das durchgehende längliche Element (11) übertragen wird, zwischen 0,5 N und 8 N beträgt.

4. Verfahren nach Anspruch 1, 2 oder 3, umfassend den folgenden Schritt: Halten der Längsspannung (σᵢₙ) des durchgehenden länglichen Elements (11), das in den zickzackförmigen Pfad eintritt, gleich oder größer als die Längsspannung (σₒᵤₜ) beim Austritt aus dem zickzackförmigen Pfad.

5. Verfahren nach einem der Ansprüche 1 bis 4, wobei eine Längszugkraft (Tₒᵤₜ), die auf das durchgehende längliche Element (11) an dem Ausgang des durchgehenden länglichen Elements (11) aus dem zickzackförmigen Pfad ausgeübt wird, kleiner als 20 N ist.

6. Verfahren nach einem der Ansprüche 1 bis 5, wobei eine Differenz der Längszugkraft (ΔT), die auf das durchgehende längliche Element (11) zwischen einem Ausgang des durchgehenden länglichen Elements (11) aus dem zickzackförmigen Pfad ausgeübt wird, und einem Eingang in den zickzackförmigen Pfad kleiner als 10 N ist.

7. Verfahren nach einem der Ansprüche 1 bis 6, wobei eine Längszugkraft (Tᵢₙ), die auf das durchgehende längliche Element (11) an einem Eingang des durchgehenden länglichen Elements (11) in den zickzackförmigen Pfad ausgeübt wird, größer als etwa 10 N ist.

8. Verfahren nach Anspruch 1 oder 2, umfassend den folgenden Schritt: Veranlassen der Drehung der ersten Wellen (18) mit einer Winkelgeschwindigkeit (ω) gleich oder größer als das Verhältnis zwischen einer Vorschubgeschwindigkeit (V) des durchgehenden länglichen Elements (11) und dem Radius einer radial äußeren Oberfläche (19a) der ersten Laufrollen (19).

9. Verfahren nach Anspruch 1, wobei eine Vorschubgeschwindigkeit (V) des durchgehenden länglichen Elements (11) entlang des zickzackförmigen Pfades höher als 400 m/min ist.

10. Vorrichtung zur Steuerung der Zufuhr eines durchgehenden länglichen Elements in einem Verfahren zur Fertigung von Reifen für Fahrzeugräder, wobei die Vorrichtung umfasst:
- eine dynamische Speichereinrichtung (10) umfassend eine Vielzahl von Laufrollen (19, 31), die an einer Vielzahl von Wellen (18, 30) montiert sind, wobei die Laufrollen (19, 31) einen zickzackförmigen Pfad für das durchgehende längliche Element (11) definieren;
- zumindest eine Zufuhrspule (34), auf welche das durchgehende längliche Element (11) gewickelt ist, wobei die Spule (34) stromaufwärts der dynamischen Speichereinrichtung (10) platziert ist;
**dadurch gekennzeichnet, dass** erste Wellen (18) der Vielzahl von Wellen (18, 30) so angetrieben werden, dass sie um jeweilige Hauptachsen (X-X) in einer Richtung in Übereinstimmung mit einer Zuführrichtung (F) des durchgehenden länglichen Elements (11) durch den Pfad gedreht werden.

11. Vorrichtung nach Anspruch 10, wobei erste Laufrollen (19) der Vielzahl von Laufrollen (19, 31) freilaufend an den jeweiligen ersten Wellen (18) montiert sind.

12. Vorrichtung nach Anspruch 11, wobei Lager (20) radial zwischen den ersten Laufrollen (19) und den ersten Wellen (18) angeordnet sind.

13. Vorrichtung nach einem der vorhergehenden Ansprüche 10 bis 12, umfassend zumindest einen Motor (24), der mit einer oder mehreren der ersten Wellen (18) wirkverbunden ist.

14. Vorrichtung nach einem der vorhergehenden Ansprüche 10-13, wobei die dynamische Speichereinrichtung (10) umfasst:
einen oberen Tragbalken (16), der obere Laufrollen (19) der Vielzahl von Laufrollen (19, 31) trägt;
einen unteren Tragbalken (29), der untere Laufrollen (31) der Vielzahl von Laufrollen (19, 31) trägt;
wobei die ersten Wellen (18) die oberen Laufrollen (19) und/oder die unteren Laufrollen (31) tragen.

15. Vorrichtung nach dem vorhergehenden Anspruch, wobei der obere Tragbalken (16) und der untere Tragbalken (29) eine kammartige Gestalt umfassend eine Vielzahl von Fortsätzen (17, 17'), die jeweils eine Welle (18, 30) tragen; wobei zumindest ein Motor (24) und zumindest ein flexibles Getriebeelement (27), das den Motor (24) mit den ersten Wellen (18) verbindet, an dem Tragbalken (16) montiert sind, der die ersten Wellen (18) trägt.

## Revendications

1. Procédé pour commander la distribution d'un élément allongé continu dans un procédé pour la construction de pneus pour roues de véhicule, comprenant le fait :
- d'agencer un élément allongé continu (11) le long d'un trajet en zigzag défini par une pluralité de rouleaux (19, 31) sur lesquels l'élément allongé continu est partiellement enroulé ;
- de faire avancer l'élément allongé continu (11) dans une direction d'acheminement (F) le long dudit trajet en zigzag ;
- de maintenir la tension longitudinale (σ_{d}) dans l'élément allongé continu (11) en aval des premiers rouleaux (19) de ladite pluralité de rouleaux (19, 31) inférieure ou égale à la tension longitudinale (σᵤ) en amont desdits premiers rouleaux (19), en provoquant la rotation desdits premiers rouleaux (19) dans le sens selon ladite direction d'acheminement (F) ;
- de distribuer ledit élément allongé continu au niveau d'un poste de travail (7) pour construire des pneus.

2. Procédé tel que revendiqué dans la revendication 1, dans lequel la rotation des premiers rouleaux (19) est générée par le frottement entre lesdits premiers rouleaux (19) et des premiers arbres correspondants (18) sur lesquels ils sont montés libres.

3. Procédé tel que revendiqué dans la revendication 1 ou 2, dans lequel une force de poussée longitudinale transmise par chaque premier rouleau (19, 31) à l'élément allongé continu (11) est comprise entre 0,5N et 8N.

4. Procédé tel que revendiqué dans la revendication 1, 2 ou 3, comprenant le fait : de maintenir la tension longitudinale (σᵢₙ) de l'élément allongé continu (11) entrant dans le trajet en zigzag supérieure ou égale à la tension longitudinale (σₒᵤₜ) sortant dudit trajet en zigzag.

5. Procédé tel que revendiqué dans l'une des revendications 1 à 4, dans lequel une force de traction longitudinale (Tₒᵤₜ) exercée sur l'élément allongé continu (11) à une sortie dudit élément allongé continu (11) du trajet en zigzag est inférieure à 20N.

6. Procédé tel que revendiqué dans l'une des revendications 1 à 5, dans lequel une différence de force de traction longitudinale (ΔT) exercée sur l'élément allongé continu (11) entre une sortie dudit élément allongé continu (11) du trajet en zigzag et une entrée dans le trajet en zigzag est inférieure à 10N.

7. Procédé tel que revendiqué dans l'une des revendications 1 à 6, dans lequel une force de traction longitudinale (Tᵢₙ) exercée sur l'élément allongé continu (11) à une entrée dudit élément allongé continu (11) dans le trajet en zigzag est supérieure à environ 10N.

8. Procédé tel que revendiqué dans la revendication 1 ou 2, comprenant le fait : de provoquer la rotation des premiers arbres (18) avec une vitesse angulaire (ω) supérieure ou égale au rapport entre une vitesse d'avance (V) de l'élément allongé continu (11) et le rayon d'une surface radialement externe (19a) des premiers rouleaux (19) .

9. Procédé tel que revendiqué dans la revendication 1, dans lequel une vitesse d'avance (V) de l'élément allongé continu (11) le long du trajet en zigzag est supérieure à 400 m/min.

10. Appareil pour commander la distribution d'un élément allongé continu dans un procédé pour la construction de pneus pour roues de véhicule, comprenant :
- un dispositif de stockage dynamique (10) comprenant une pluralité de rouleaux (19, 31) montés sur une pluralité d'arbres (18, 30), lesdits rouleaux (19, 31) définissant un trajet en zigzag pour ledit élément allongé continu (11) ;
- au moins une bobine d'acheminement (34) sur laquelle ledit élément allongé continu (11) est enroulé, ladite bobine (34) étant placée en amont du dispositif de stockage dynamique (10) ;
**caractérisé en ce que** les premiers arbres (18) de ladite pluralité d'arbres (18, 30) sont actionnés pour tourner autour d'axes principaux respectifs (X-X), dans un sens selon une direction d'acheminement (F) de l'élément allongé continu (11) à travers ledit trajet.

11. Appareil tel que revendiqué dans la revendication 10, dans lequel des premiers rouleaux (19) de ladite pluralité de rouleaux (19, 31) sont montés libres sur les premiers arbres respectifs (18).

12. Appareil tel que revendiqué dans la revendication 11, dans lequel des paliers (20) sont interposés radialement entre les premiers rouleaux (19) et les premiers arbres (18).

13. Appareil tel que revendiqué dans l'une des revendications précédentes 10 à 12, comprenant au moins un moteur (24) relié de manière fonctionnelle à un ou plusieurs desdits premiers arbres (18).

14. Appareil tel que revendiqué dans l'une des revendications précédentes 10 à 13, dans lequel le dispositif de stockage dynamique (10) comprend :
une barre de support supérieure (16) portant des rouleaux supérieurs (19) de ladite pluralité de rouleaux (19, 31) ;
une barre de support inférieure (29) portant des rouleaux inférieurs (31) de ladite pluralité de rouleaux (19, 31) ;
dans lequel les premiers arbres (18) supportent les rouleaux supérieurs (19) et/ou les rouleaux inférieurs (31) .

15. Appareil tel que revendiqué dans la revendication précédente, dans lequel la barre de support supérieure (16) et la barre de support inférieure (29) ont une forme de peigne comprenant une pluralité d'appendices (17, 17'), portant chacun un arbre (18, 30) ; où au moins un moteur (24) et au moins un élément de transmission flexible (27), reliant le moteur (24) aux premiers arbres (18), sont montés sur la barre de support (16) portant les premiers arbres (18).
